# EUROPEAN PATENT APPLICATION

(11) **EP 0 606 675 A2**
(43) Date of publication of application: **20.07.1994**
(21) Application number: 93203376.4
(22) Date of filing: 02.12.1993
(51) Int. Cl.: H04N 7/13, H04N 7/137

(54) **Method for loss-less compression of full motion video**

(30) Priority: 16.12.1992 US 990974
(71) Applicant: International Business Machines Corporation, Armonk, N.Y. 10504 (US)
(72) Inventor: Parikh, Shrikant N., Mesquite, TX 75150 (US); Reddy, Hari N., Grapevine, TX 76051 (US)
(74) Representative: Louet Feisser, Arnold

(57) **Abstract**

The present invention provides a method for loss-less compression of full motion video by utilizing the redundancy between a greater number of frames than in the prior art. Each frame is analyzed for a characteristic of change and only the change information is stored throughout the sequence of frames. Knowledge of future frames is also utilized to store base information in a library for use with the future frames.

## Description

This invention relates in general to computer software, and in particular to a method for loss-less compression of full motion video.

Digitizing of analog data is a technique well known in the art. There are many advantages available with the use of digitized data over analog data. Such advantages include longer life without degradation of the data, ease of manipulation of the data, ease of transmission of the data, ease of storage of the data, availability of digital computer processing, and etc. Thus, it is frequently preferable to convert analog data into digital data.

For example, video data that is digitized may be of higher quality and may last longer without degradation than the analog version thereof. Thus the conversion of analog video, such as is found on a video cassette recorder (VCR) tape, into digital video, such as is found on a video disc or a CD, will improve the quality and life of the video. Unfortunately, uncompressed full motion digital video may require storage rates of greater than 20 megabytes per second. Such a large storage requirement imposes a burden which makes the storage, retrieval, and transmission of uncompressed digitised video difficult. Therefore, it is highly advantageous to compress video when digitizing.

Several video compression techniques are known in the art. These previous techniques exploit a large amount of redundancy that exist within a frame and between two consecutive frames. Unfortunately, restricting the exploitation of redundancy between consecutive frames only results in repetitive transmission of the same data and does not eliminate the redundancy in longer sequences of frames. Thus, there is a need for a method of exploiting the knowledge that can be derived from the analysis of a longer sequence of frames to achieve a significant reduction in the amount of data that needs to be stored and/or transmitted to recreate current frames.

The present invention provides a method for loss-less compression of full motion video which eliminates or substantially reduces the problems with prior art methods of video compression. The present invention utilizes the redundancy present in longer sequences of video to reduce the amount of information required for storage and reproduction of frames.

In accordance with one aspect of the present invention, a method of compressing a digitized video is provided. The characteristics of change from one frame to the next in a scene are determined. Instructions for encoding each frame of the scene are based upon the characteristics of change that are determined.

In accordance with another aspect of the present invention, the frames of the scene are analyzed for localized change, linear change, angular change, random change, historical change, and part of scene exposed from the previous frame change. Depending upon the type of change, instructions are provided for encoding the frame.

It is a technical advantage of the present invention that redundancy in a longer sequence of frames is exploited. By exploiting this redundancy, the amount of storage required for the digitizing of an analog video is reduced over the prior art.

For a more complete understanding of the present invention and the advantages thereof, reference is now made to the attached drawings, in which:
Figures 1A and 1B are schematic illustrations of an encoding/compression computer which may be used to implement the present invention;
Figures 2A and 2B are illustrations of linear movement of an object;
Figures 3A and 3B are illustrations of linear movement of a camera;
Figures 4A and 4B are illustrations of random movement;
Figure 5 is an illustration of angular movement of an object;
Figures 6A and 6B illustrate angular movement of a camera;
Figures 7A, 7B, and 7C illustrate a part of scenery exposed from a previous frame;
Figure 8 illustrates a region of change;
Figure 9 illustrates a historical library of scenes;
Figures 10A and 10B are flowcharts of steps used to digitize a video in accordance with the present invention; and
Figure 11 is a flowchart of the steps to decode a video once it has been digitized using the present invention.

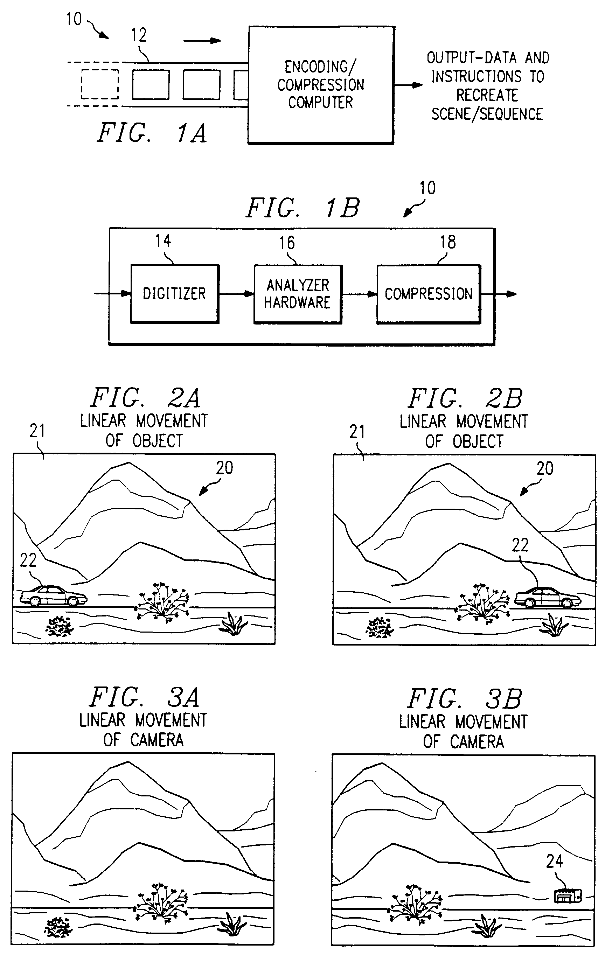

Referring to Figures 1A and 1B, a schematic illustration of an encoding/compression computer 10, as is known in the art, is shown for use with the present invention. An analog video 12 is used as input to the encoding/compression computer 10. As a result of manipulations within the computer 10, output data and instructions to recreate a scene/sequence of scenes is produced by the computer 10. In Figure 1B, the computer 10 is illustrated in further detail. The computer 10 comprises a digitizer 14, analyzer hardware 16, and a compression method 18 used to compress the video 12.

In accordance with the present invention, video compression exploits the knowledge that can be derived from the analysis of a longer sequence of frames than is available in the prior art. The knowledge and analysis of future frames (in pre-recorded video) assists in detecting certain patterns of change which are very significant from the perspective of full motion video. By taking advantage of the availability of a longer sequence of past frames, significant reduction in the amount of data that needs to be stored and/or transmitted to recreate current frames is achieved.

A video sequence consists of one or more major changes to scenery similar to the changes of scenes in a play. Within a scene the changes are perceived to be gradual or continuous. For example, if a camera is positioned to conduct surveillance, the scanning of the scenery and the changes to the scenery are slow and continuous. In accordance with the present invention, pre-recorded video sequences are analyzed for the presence of the following types of characteristics:
1) linear motion; 2) random motion; 3) angular motion; 4) memory of scenery exposed; 5) regions of change within a scene; and, 6) historical data. The analysis and identification of these characteristics allows the compression of the digitized video by reducing redundancy between longer sequences of frames.

Each frame comprises a plurality of blocks which are of a predefined size (i.e., 8 x 8 pixels, 16 x 16 pixels, etc.). Changes between corresponding blocks from frame to frame are defined as "deltas". Thus, as a scene changes, the blocks either change by some delta or remain the same. Once a video is compressed, no further compression is required (important due to the fact that compressing can be a time-consuming process). In addition, decompression takes much less time than compressing.

Initially, the present invention must encode the first frame in a previously unencountered scene. In such a frame, the starting point is to identify and encode the dominant color. All other colors will be encoded as a change (delta) to the dominant color. For example, referring to Fig. 2A, if the sky 21 is the dominant color, the entire frame would be encoded as that color. A delta would then be encoded for the remaining colors. Once the first frame of the video sequence is encoded, the above identified analysis of characteristics proceeds, as will be subsequently described in greater detail.

Linear motion characteristics are illustrated by referring to Figures 2A, 2B, 3A, and 3B. In figures 2A and 2B, linear movement of an object across a scene appears. In Figure 2A, the background 20 (i.e., the sky, the mountains, the desert, etc.) is unchanged while an object such as, for example, a car 22 moves linearly from left to right. Using the concept of blocks, the car 22 is defined within a certain number of blocks. As the car 22 moves linearly, the car 22 will be moved as a set of blocks, incrementally, from frame-to-frame. A delta will be required for any changes to the background scenery that the shape of the car abuts in each block. In Figures 3A and 3B, the camera moves linearly rather than an object. From Figure 3A to Figure 3B, it can be seen that the camera moves linearly from left to right. In Figure 3A (the starting point), there is no structure 24 as is seen in Figure 3B when the camera has moved to the right. In either instance, the object or the camera moves in a linear manner while the scene being recorded is stationary. For example, over a period of a few seconds, "n" frames of the scene may be recorded while the object or the camera moved at a certain speed. There will be a significant amount of redundancy between two consecutive frames and change will be either in a linear path throughout the sequence or at one end of the scene where a new addition to the scene will enter and part of the scene at the opposite end will be removed from the next frame.

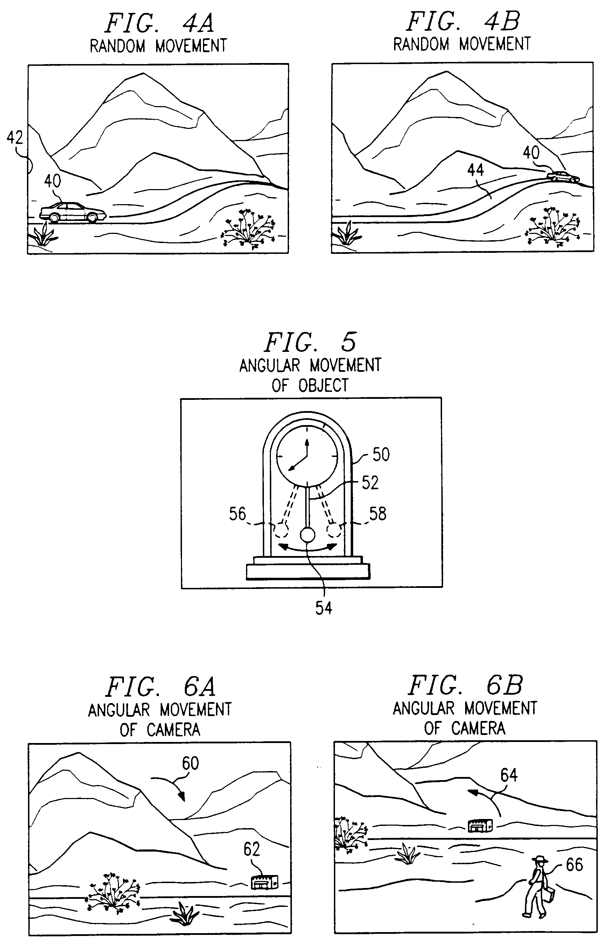

Referring to Figures 4A and 4B, random movement of an object through a scene is shown. An object, for example, a car 40 can be seen to enter Figure 4A from the left edge 42 thereof. The car 40 then traverses through the scene from left (Fig. 4A) to right (Fig. 4B). In contrast to the linear movement of an object shown in Figures 2A and 2B, the car 40 does not traverse the scene linearly, rather, the car 40 traverses the scene in a random pattern along the road 44. Thus, while the majority of the scene is unchanged, the car 40 is encoded along its random path by specifying the series of starting coordinates (i.e., upper left corner of the blocks comprising the car 40) of the frames to be displayed in a sequence along with any other delta to the scene.

Referring to Figures 5, 6A, and 6B, angular movement is illustrated. In Figure 5, a clock 50 has a pendulum 52. A weight 54 at the end of the pendulum 52 can be seen to move angularly between dashed positions 56 and 58. In Figures 6A and 6B, angular movement of a camera across a scene is illustrated. In Figure 6A, the scene is recorded as the camera moves gradually in a direction down and to the right as indicated by an arrow 60. As the camera moves down and to the right in the direction 60, a structure 62 can be seen to move in a direction up and to the left as indicated by an arrow 64. In addition, a person 66 can be seen to appear in Figure 6B as the camera moves in the direction 60 to take in additional scenery. Using the same principles as with linear motion, angular motion of a camera over a scene can be recreated from a larger scene by specifying the center, angular velocity, and radius of the angular path over which the camera was moving while recording.

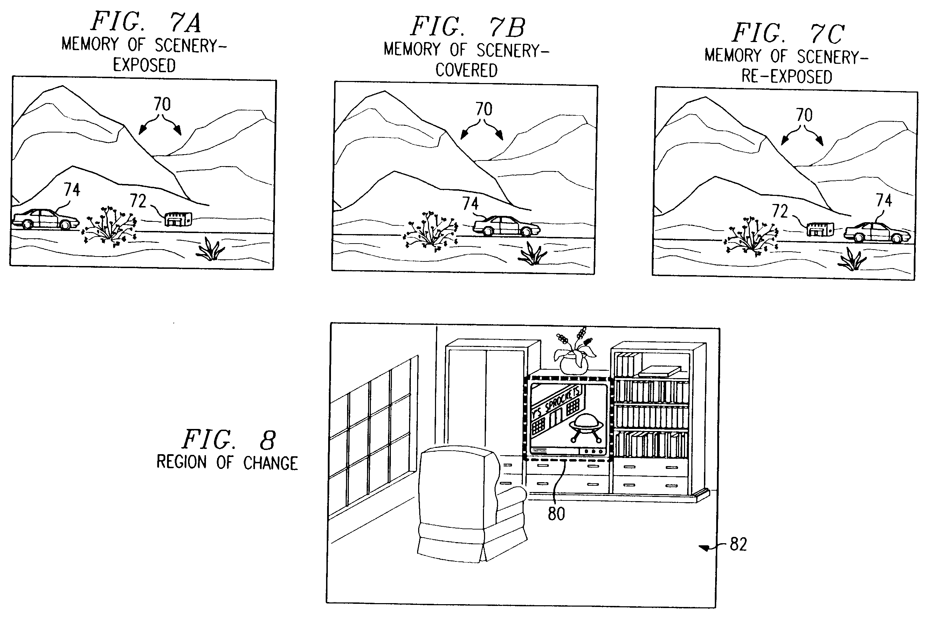

Referring to Figures 7A, 7B and 7C, an example is shown of a background that remains unchanged while an object moves across and in front of other objects. As can be seen from viewing the figures simultaneously, mountains 70 remain unchanged between the three frames. However, a structure 72 is shown in Figure 7A and 7C while it is covered by a car 74 in scene 7B. By maintaining a memory of the structure 72, it may be recreated from memory after the car 74 has moved beyond coverage thereof rather than having to create the structure 72 as if it were new scenery in accordance with the prior art.

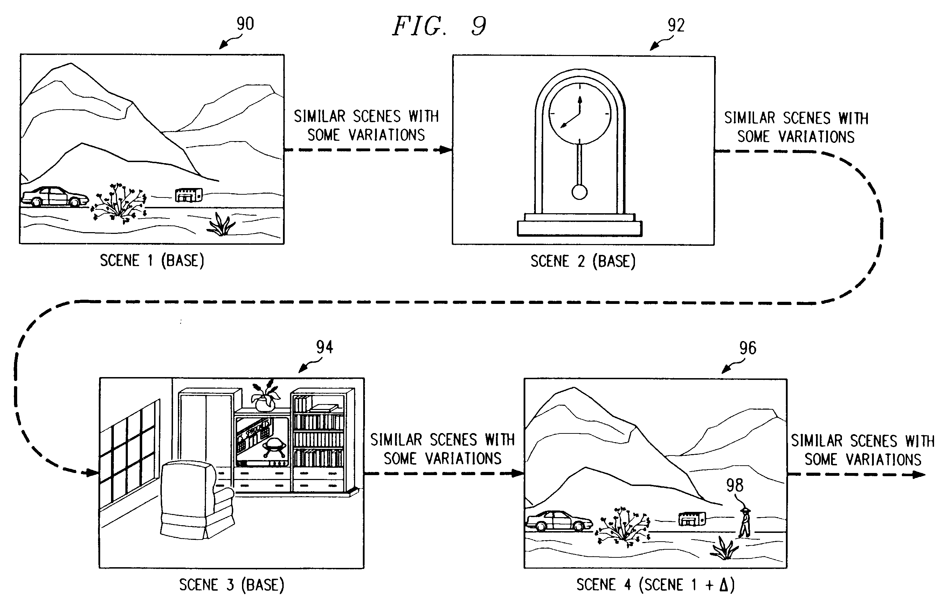

Referring to Figure 8, a region or area of change is illustrated. A region of change is generally indicated by dashed line 80. Within the region of change 80, images therein change as the scene progresses. However, the remainder of the frame remains the same. As shown by Figure 8, a room generally indicated by reference numeral 82 remains substantially the same throughout successive frames while the area within the region of change 80 (a television screen having a program showing thereon) changes from frame to frame. The region of change 80 is fairly localized. In this case, the recipient (i.e., the device that decodes the encoded video) can be informed that for the next "n" frames, the scene will be the same. However, on that general scene, another mini-frame will be overlaid. Until informed otherwise, the encoding from that point onward will strictly describe the smaller frame. This will result in a significant reduction in the overhead needed to describe a larger sized frame. Moreover, the recipient can pro-actively build a series of frames with the same general scene. Each of this series of scenes will be overlayed with the appropriate mini-frame (i.e. the region of change).

Referring to Figure 9, a library of scenes is illustrated. In the first scene generally indicated by reference numeral 90, there is a base frame which changes by some amount throughout the progression of the scene from frame to frame. At some point, scene 90 changes to scene two which is generally indicated by a reference numeral 92 in which similar scenes to the base frame for scene 92 are created in the same fashion as previously described. At some point scene three which is generally indicated by reference numeral 94 begins with a series of changes thereto in subsequent frames. Using the present invention, the base frame for each scene is stored and only changes thereto must be stored for subsequent frames.

Over a long sequence of frames, some scenes may tend to reappear such as, for example, scene 4 which is generally indicated by a reference numeral 96. Scene 96 is substantially the same as scene 90 except that a person 98 has appeared in scene 96. In order to avoid transmitting portions of the same image over and over again, the receiver is instructed to maintain a history of the frames received in the past. Instructions to recreate the current frame from the image segments from the historical frames may then be sent to the receiver.

Since the receiver has a finite amount of storage, it is not practical to maintain a large history of recently received frames. Since future frames are known to the sender, an analysis of these frames may result in instructions to the receiver to either increase or reduce the number of historical frames saved for future reference. In other words, the number of frames that are saved is dynamically controlled and is adapted to the changes to the scene.

For example, if the scene has completely changed and the analysis of future frames indicates that the historical frames that have heretofore been maintained are of little value, the receiver can be instructed to discard them. Further, an analysis of the future frames may reveal that only portions of the previous frames may need to be kept. These results greatly enhance resource utilization at the receiver end. Additionally, if analysis of the entire video sequence indicates that certain image segments are used frequently, a catalog or library of these image segments is maintained and instructions are sent to the receiver to reconstruct the current frame from the library of image segments.

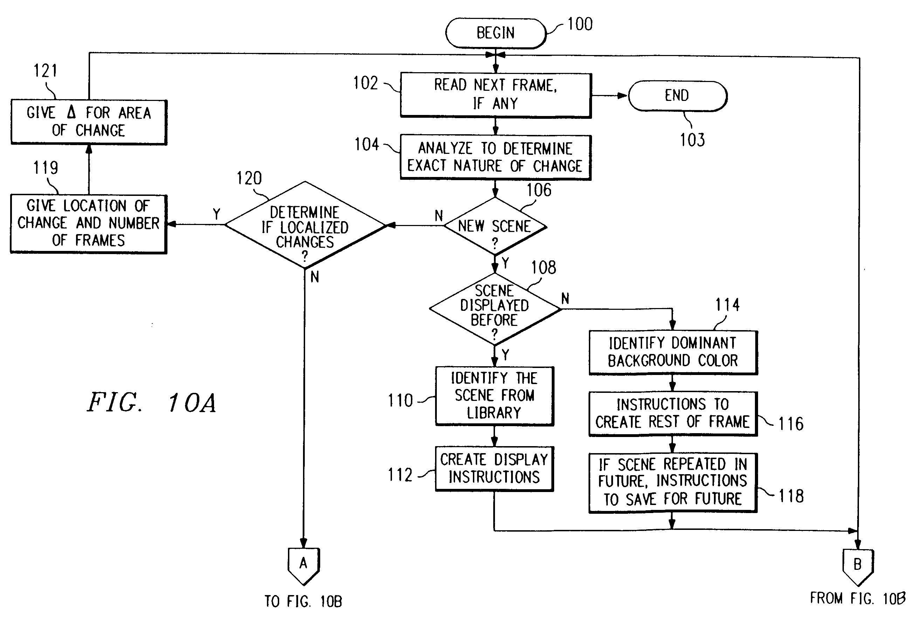

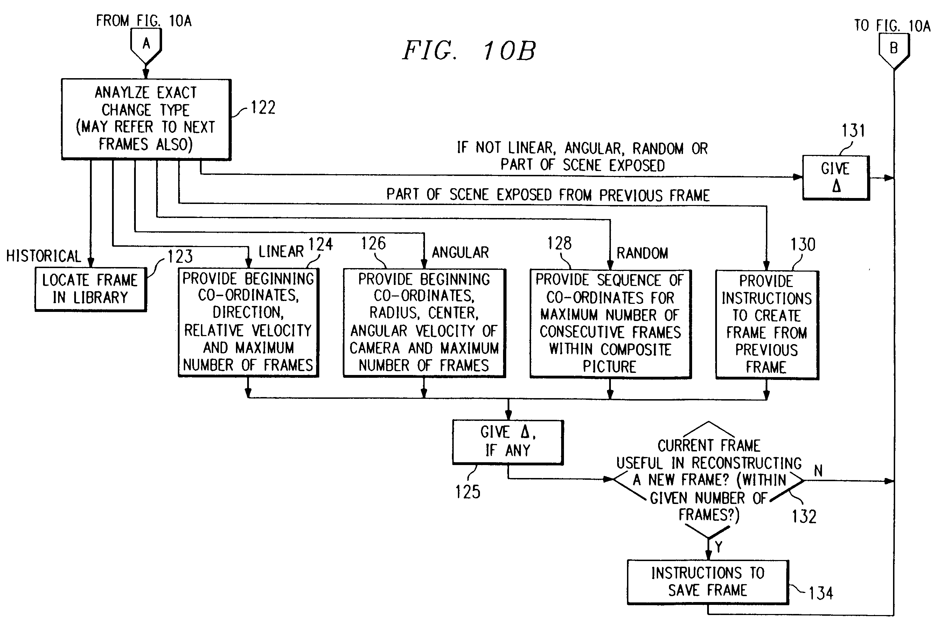

Referring to Figures 10A and 10B, flowcharts encoding of a video utilizing the present invention are shown. After beginning at 100, the next frame, if any, is read at 102. If there is no next frame, the present invention ends at 103. If there is a next frame, the frame is analyzed to determine the exact nature of any change thereto at block 104. At decision block 106 it is determined whether or not the frame depicts a new scene. If the response to decision block 106 is yes, it is determined at decision block 108 whether or not the scene has been displayed before. If the response to decision block 108 is yes, the scene is located and identified from the library at block 110. Display instructions are created at block 112 followed by a return to block 102 to read the next frame.

If the response decision block 108 is no, the dominant background color is identified at block 114. Instructions are given to create the rest of the frame as a change (delta) to the dominant color at block 116. If the scene is repeated in future frames, instructions are given to save the frame for future use at block 118. The present invention then returns to block 102 to read the next frame.

Returning to decision block 106, if the response thereto is no, it is determined at decision block 120 whether or not the changes are localized (i.e., a region or area of change). If the response to decision block 120 is yes (it is a region of change) a location of the change is given along with the number of frames at block 119. A delta for the area of change is given at block 121 followed by a return to block 102 to read the next frame.

If the response to decision block 120 is no, the exact type of change is analyzed at block 122 (see Fig. 10B). The change may be historical, linear, angular, random, part of scene exposed from previous frame, or none of the above. If the change is historical (i.e., a previous scene which has been stored in the library), the frame is located in the library at block 123. If the change is linear, the beginning coordinates, direction, relative velocity and maximum number of frames is provided at block 124. If the change is angular, beginning coordinates, radius, center, angular velocity of camera and maximum number of frames is provided at block 126. If the change is random, a sequence of coordinates for the maximum number of consecutive frames within a composite picture is provided at block 128. If the change is part of a scene exposed from the previous frame, instructions to create the frame from a previous frame are provided at block 130. If the change is none of the above types of change, a delta is given at block 131 followed by a return to block 102 (see Fig. 10A). Subsequent to blocks 123, 124, 126, 128 or 130, a delta to the scene, if any, is then given at block 125. It is then determined whether or not the current frame is useful in constructing a new frame (within a given predetermined number of frames) at decision block 132. If the response to decision block 132 is yes, instructions are given to save the frame at block 134. If the response to decision block 132 is no or after block 134, the present invention returns to block 102 (see Fig. 10A).

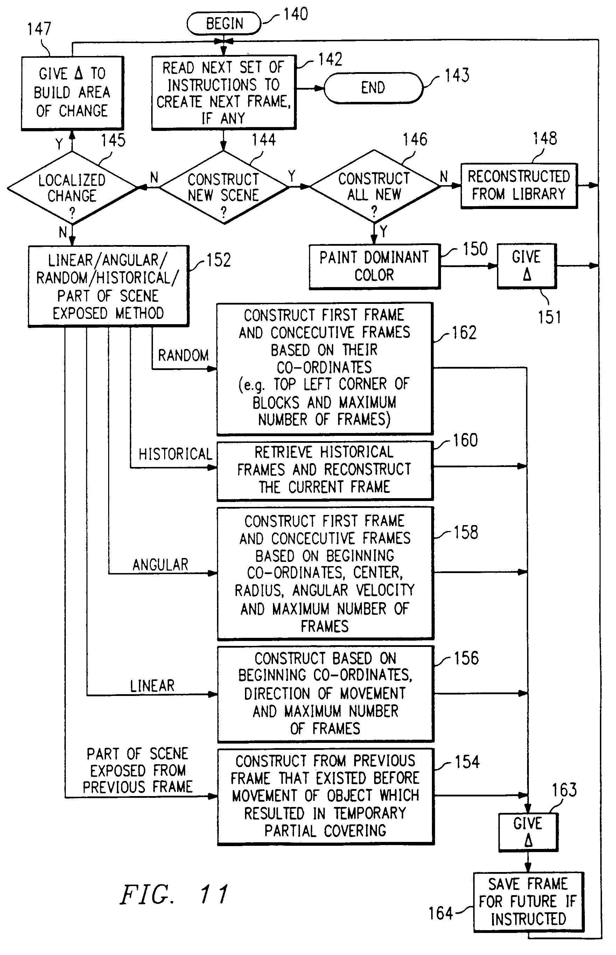

Referring to Figure 11, a flow diagram of the decoding of a digitized video using the present invention is illustrated. After beginning at 140, the next set of instructions to create the next frame, if any, is read at block 142. If there is no next frame, the present invention ends at 143. If there is a next frame, it is determined at decision block 144 whether or not to construct a new scene. If the response to decision block 144 is yes, it is determined at decision block 146 whether or not to construct an all new frame. If the response to decision block 146 is no, the frame is reconstructed from the library at block 148 followed by a return to block 142. If the response to decision block 146 is yes, the dominant color is painted at block 150 and a change (delta) is given at block 151 followed by a return to block 142.

If the response to decision block 144 is no, it is determined at decision block 145 whether or not the change is localized. If the response to decision block 145 is yes, a change (delta) to build the area of change is given at block 147 followed by a return to block 142.

If the response to decision block 145 is no, the method of change is identified at block 152. If the method of change is part of scene exposed from previous frame, the frame is constructed at block 154 from the previous frame that existed before the movement of an object which resulted in temporary partial covering. If the method of change is linear, the frame is constructed based on beginning coordinates, direction of movement and maximum number of frames at block 156. If the method of change is angular, the first frame and consecutive frames are constructed based on beginning coordinates, center, radius, angular velocity and maximum number of frames at block 158. If the method of change is historical, the historical frames are retrieved and the current frame is reconstructed at block 160. If the method of change is random, the first frame is constructed and consecutive frames are constructed based on their coordinates (i.e., top left corner of frame and maximum number of frames) at block 162. Subsequent to blocks 154, 156, 158, 160, or 162, a change (delta), if any, is given at block 163. The frame is then saved for future use, if instructed, at block 164. The present invention then returns at block 142 to read the next set of instructions.

In summary, the present invention utilizes the redundancy present in longer sequences of frames to reduce the amount of information that must be stored. It is first determined what is the nature of the change from a previous frame. Depending on whether the change is localized, linear, angular, random, historical, part of scene exposed from previous frame, or none of the above, instructions are provided to store the change only. Thus, it is possible to reduce the overhead required to store a digitized video.

Although the present invention has been particularly shown and described with reference to a preferred embodiment, it will be understood by those skilled in the art that various changes in form and detail may be made without departing from the spirit and scope of the invention.

## Claims

1. A method of compressing a digitized video, comprising the steps of:
determining characteristics of change from a first frame of video to subsequent frames of video in a video scene; and
providing instructions for encoding said subsequent frames based upon said characteristics of change.

2. The method of Claim 1, wherein said step of determining comprises analyzing said frames for localized, linear, angular, random, historical and part of scene exposed from previous frame change.

3. The method of Claim 1 or 2, wherein said step of providing instructions comprises giving a location of change and a number of frames if said characteristic is said localized change.

4. The method of any of the preceding Claims, wherein said step of providing instructions comprises providing beginning coordinates, direction, incremental movement of a set of blocks comprising an object and maximum number of frames if said characteristic is said linear change.

5. The method of any of the preceding Claims, wherein said step of providing instructions comprises providing beginning coordinates, radius, center, angular velocity and maximum number of frames if said characteristic is said angular change.

6. The method of any of the preceding Claims, wherein said step of providing instructions comprises providing a sequence of coordinates for a maximum number of consecutive frames if said characteristic is said random change.

7. The method of any of the preceding Claims, wherein said step of providing instructions comprises providing instructions to create re-exposed part from a previous frame if said characteristic is said part of scene exposed from previous frame change.

8. The method of any of the preceding Claims, wherein said step of providing instructions comprises providing instructions to locate frame in a library of scenes plus any change if said characteristic is said historical change.

9. The method of any of the preceding Claims, further comprising the step of decoding said instructions to reconstruct said digitized video into an analog video.

10. The method of reducing storage space required for a digitized video, comprising the step of encoding only a change from previous frames in each frame of a plurality of frames.

11. A system for compressing a digitized video, comprising
means for determining characteristics of change from a first frame of video to subsequent frames of video in a video scene; and
means for providing instructions for encoding said subsequent frames based upon said characteristics of change.

12. The system of Claim 11, wherein said means for determining comprises means for analyzing said frames for localized, linear, angular, random, historical and part of scene exposed from previous frame change.

13. The system of Claim 11 or 12, wherein said means for providing instructions comprises means for giving a location of change and a number of frames if said characteristic is said localized change.

14. The system of any of Claims 11-13, wherein said means for providing instructions comprises means for providing beginning coordinates, direction, incremental movement of a set of blocks comprising an object and maximum number of frames if said characteristic is said linear change.

15. The system of any of Claims 11-14, wherein said means for providing instructions comprises means for providing beginning coordinates, radius, center, angular velocity and maximum number of frames if said characteristic is said angular change.

16. The system of any of Claims 11-15, wherein said means for providing instructions comprises means for providing a sequence of coordinates for a maximum number of consecutive frames if said characteristic is said random change.

17. The system of any of Claims 11-16, wherein said means for providing instructions comprises means for providing instructions to create re-exposed part from a previous frame if said characteristic is said part of scene exposed from previous frame change.

18. The system of any of Claims 11-17, wherein said means for providing instructions comprises means for providing instructions to locate frame in a library of scenes plus any change if said characteristic is said historical change.

19. The system of any of Claims 11-18, further comprising the step of means for decoding said instructions to reconstruct said digitized video into an analog video.
